# EUROPÄISCHE PATENTSCHRIFT

(11) **EP 3 408 166 B1**
(45) Veröffentlichungstag und Bekanntmachung des Hinweises auf die Patenterteilung: **13.04.2022**
(21) Anmeldenummer: 17702094.8
(22) Anmeldetag: 30.01.2017
(51) Int. Cl.: B62L 1/00, B62L 1/10, B62L 3/02, F16D 65/00, F16D 49/00, F16D 121/04, B62J 11/13

(54) **HYDRAULISCHE FELGENBREMSE MIT EINER NEHMERARMATUR**
HYDRAULIC RIM BRAKE WITH A RECEIVING FITTING
FREIN À PATIN HYDRAULIQUE AVEC ARMATURE RÉCEPTRICE

(30) Priorität: 29.01.2016 DE 102016201424
(43) Veröffentlichungstag der Anmeldung: 05.12.2018
(73) Patentinhaber: Gustav Magenwirth GmbH & Co. KG, 72574 Bad Urach (DE)
(72) Erfinder: HUJER, Joachim, 72582 Grabenstetten (DE)
(74) Vertreter: Friese Goeden Patentanwälte PartGmbB
(86) Internationale Anmeldenummer: PCT/EP2017/051948
(87) Internationale Veröffentlichungsnummer: WO 2017/129825

(56) Entgegenhaltungen:
- DE-A1-102011 003 274
- DE-A1-102011 110 795
- DE-A1-102014 210 196
- US-A1- 2007 187 188

## Beschreibung

Die Erfindung betrifft eine hydraulische Felgenbremse mit einer Nehmerarmatur gemäß dem Oberbegriff von Anspruch 1, insbesondere für eine hydraulische Felgenbremse lenkergeführter Fahrzeuge und weiter insbesondere für eine hydraulische Fahrradfelgenbremse sowie auch eine Nehmerarmatur einer hydraulischen Fahrradfelgenbremse gemäß dem Oberbegriff von Anspruch 1.

Die Nehmerarmaturen herkömmlicher hydraulischer Felgenbremsen werden in der Regel an Cantileverbolzen angebracht, die an einer bestimmten Position des Rahmenteils des Fahrzeugs als Aufnahmeeinrichtungen für die Nehmerarmatur vorgesehen sind. In der Regel sind die Bremsbeläge der Nehmerarmatur oberhalb der beiden Cantileverbolzen angeordnet, so dass es erforderlich, einen Bügel oder eine Montageplatte vorzusehen, um die beiden Bremszylinder oberhalb des Laufrades miteinander zu verbinden. Dadurch wird verhindert, dass sich die beiden Bremszylinder infolge der beim Bremsen auftretenden Kräfte um den Cantileverbolzen wegdrehen.

Die Aufnahmeeinrichtungen für die Nehmerarmatur sind in einer festen Position an den Rahmenteilen des Fahrrads vorgesehen. Weit verbreitet sind die oben genannten Cantileverbolzen. Damit die Bremsbeläge optimal an den Felgen des zu bremsenden Laufrads angreifen können, ist es vorteilhaft, dass die Nehmerarmatur eine Einstellvorrichtung aufweist, mit der der Abstand des Bremszylinders und somit des Bremsbelags von dem Cantileverbolzen bezogen auf die Achse des Rahmenteils eingestellt werden kann. Um die Einstellbarkeit zu gewährleisten, ist es bekannt, in den Montageplatten bzw. Bügeln Langlöcher vorzusehen, die eine Befestigung der Nehmerarmatur in verschiedenen Abständen zu den Cantileverbolzen ermöglichen.

Die bekannten Nehmerarmaturen haben den Nachteil, dass Montageplatten bzw. Bügel notwendig sind, um eine gute Bremsleistung zu erreichen. Dadurch ergibt sich ein relativ großes Gewicht der Bremsarmatur.

Das Dokument DE 10 2014 210196 A1 offenbart eine bekannte hydraulische Felgenbremse mit allen Merkmalen des Oberbegriffs des unabhängigen Anspruchs 1.

Der Erfindung liegt die Aufgabe zugrunde, eine Nehmerarmatur anzugeben, die an bei hoher Qualität ein geringes Gewicht aufweist.

Diese Aufgabe der Erfindung wird mit einer Nehmerarmatur gemäß den Merkmalen des Anspruchs 1 Vorteilhafte Ausgestaltungen der Erfindung sind in den abhängigen Ansprüchen bzw. der Beschreibung und insbesondere der folgenden Beschreibung angegeben.

Erfindungsgemäß wird eine Nehmerarmatur für eine hydraulische Felgenbremse angeben, insbesondere eines lenkergeführten Fahrzeugs, insbesondere eines Fahrrads, mit einem Bremszylinder und einem Adapter zur Befestigung an einer Aufnahmeeinrichtung aufweist, die an einem Rahmenteil des Fahrzeugs vorgesehen ist, wobei der Adapter bezogen auf die Längsrichtung des Rahmenteils eine kleinere Abmessung als die Aufnahmeeinrichtung aufweist. Diese Ausführung der Erfindung hat den Vorteil, dass der Adapter mit seinen beiden Enden an der Aufnahmeeinrichtung angreifen kann, und gleichzeitig noch ein Weg für eine Verstellung seiner Lage entlang der Längsrichtung des Rahmenteils zur Verfügung steht. Das hat den Vorteil, dass die Lage der Bremsbeläge an die Felge angepasst werden kann. Diese Ausführung der Erfindung kann besonders vorteilhafterweise aber nicht notwendigerweise mit der folgenden weiteren Ausführung der Erfindung kombiniert werden.

Erfindungsgemäß wird eine hydraulische Felgenbremse mit einer Nehmerarmatur angeben, insbesondere eines lenkergeführten Fahrzeugs, insbesondere eines Fahrrads, mit einem Bremszylinder und einem Adapter zur Befestigung an einer Aufnahmeeinrichtung aufweist, die an einem Rahmenteil des Fahrzeugs vorgesehen ist, wobei der Adapter an seinen beiden bezogen auf die Längsrichtung des Rahmenteils gegenüberliegenden Enden jeweils einen Eingriffeinrichtungsabschnitt zum Eingriff mit der Aufnahmeeinrichtung aufweist.

Diese Ausführung hat den Vorteil, dass sich der Adapter an seinen beiden Enden an der Aufnahmeeinrichtung abstützen kann und somit die beim Bremsen auftretenden Kräfte gut über die Aufnahmeeinrichtung in das Rahmenteil abgeleitet werden können. Das hat den Vorteil, dass zusätzliche Bauteile, wie Montageplatten oder Verstärkungsbügel leichter ausgeführt werden können oder sogar ganz entfallen können. Falls gewünscht können diese auch zusätzlich vorgesehen werden, damit größere Bremskräfte erreicht werden können, was insbesondere bei Downhill-Rennen vorteilhaft sein kann.

Gemäß einer nicht beanspruchten Ausführungsform sollte die Aufnahmeeinrichtung entsprechend ausgebildet und eingerichtet sein, dass die beiden Enden bzw. Endabschnitte des Adapters an ihr angreifen und die Bremskräfte einleiten können.

Alternativ oder zusätzlich können der Adapter bzw. die Aufnahmeeinrichtung derart angeordnet und ausgebildet sein, dass die Krafteinleitung auch in Bereichen zwischen den beiden Enden des Adapters erfolgen kann.

Alternativ zu der ersten Ausführung der Erfindung kann der Adapter bezogen auf die Längsrichtung des Rahmenteils eine größere Abmessung als die Aufnahmeeinrichtung aufweisen. Bei diesen Ausführungen der Erfindung wird die Krafteinleitung von dem Adapter auf die Aufnahmeeinrichtung an den beiden Enden der Aufnahmeeinrichtung erfolgen.

Alternativ oder zusätzlich können der Adapter bzw. die Aufnahmeeinrichtung derart angeordnet und ausgebildet sein, dass die Krafteinleitung auch in Bereichen zwischen den beiden Enden der Aufnahmeeinrichtung erfolgen kann.

Gemäß einer bevorzugten Ausführungsform kann der Adapter bezogen auf die Längsrichtung des Rahmenteils in verschiedenen Stellungen an der Aufnahmeeinrichtung montierbar sein. Das hat den Vorteil, dass die Lage des Bremsbelags an die Felge angepasst werden kann.

Erfindungsgemäß kann die Aufnahmeeinrichtung eine Verschiebeeinrichtung aufweisen, auf der der Adapter entlang der Längsrichtung des Rahmenteils um einen möglichen Verstellweg verschiebbar ist. Vorteilhafterweise kann die einmal eingestellte Lage fixiert werden und die in der Lage eingestellte Nehmerarmatur komplett von der Aufnahmeeinrichtung entfernbar und wieder montierbar sein. Das hat den Vorteil, dass die Einstellung für eine bestimmte Felge nur einmal erfolgen muss, und die Lage beim Wiedereinbau nicht noch einmal eingestellt werden muss. Außerdem können die Nehmerarmaturen an der Erstausrüster voreingestellt ausgeliefert werden, sofern Informationen über den Felgentyp und die Abmessungen der Rahmenteile vorliegen.

Gemäß einer bevorzugten Ausführungsform kann der mögliche Verstellweg bezogen auf die Längsrichtung des Rahmenteils dem Unterschied der Länge der Verschiebeeinrichtung zu der Länge des Adapters entsprechen.

Gemäß einer bevorzugten Ausführungsform kann der mögliche Verstellweg bezogen auf die Längsrichtung des Rahmenteils mehr als 1mm, vorzugsweise mehr als 2mm, weiter vorzugsweise mehr als 4mm, noch weiter bevorzugt mehr als 4mm und bevorzugt ungefähr 5mm betragen.

Gemäß einer bevorzugten Ausführungsform kann der mögliche Verstellweg bezogen auf die Längsrichtung des Rahmenteils weniger als 11mm, vorzugsweise weniger als 9mm, weiter vorzugsweise weniger als 8mm, noch weiter vorzugsweise weniger als 7mm und bevorzugt weniger als 6mm betragen.

Gemäß einer nicht beanspruchten Ausführungsform kann die Länge des Adapters bezogen auf die Längsrichtung des Rahmenteils mehr als 30mm, vorzugsweise mehr als 35mm, weiter vorzugsweise mehr als 40mm, noch weiter vorzugsweise mehr als 45mm, noch weiter vorzugsweise mehr als 50mm, noch weiter vorzugsweise mehr als 55mm und bevorzugt 60mm betragen.

Gemäß einer nicht beanspruchten Ausführungsform kann die Länge des Adapters bezogen auf die Längsrichtung des Rahmenteils weniger als 90mm, vorzugsweise weniger als 85mm, weiter vorzugsweise weniger als 80mm, noch weiter vorzugsweise weniger als 75mm, noch weiter vorzugsweise weniger als 70mm, noch weiter vorzugsweise weniger als 65mm und bevorzugt 60mm betragen.

Gemäß einer nicht beanspruchten Ausführungsform kann der Adapter an seinen gegenüberliegenden Enden jeweils eine Führungseinrichtung aufweisen. Die Führungseinrichtung ist vorteilhafterweise derart ausgebildet, dass sie mit einer entsprechenden Führungseinrichtung der Aufnahmeeinrichtung zusammenwirkt. Beispielsweise kann der Adapter eine Nut aufweisen und die Aufnahmeeinrichtung kann eine entsprechende Schiene aufweisen. Dabei können die Nut und die Schiene zumindest an einem Ende auch Hinterschnitte aufweisen, damit der Adapter nicht ohne weiteres von der Aufnahmeeinrichtung entfernt werden kann. Das hat den Vorteil, dass die Verstellung leichter durchgeführt werden kann. Beispielsweise können die Nut und die Schiene T-förmig ausgebildet sein. Die Schiene kann alternativ zu einer T-förmigen Ausbildung auch eine Schraube aufweisen, deren Kopf die T-Form der Schiene schafft. Das hat den Vorteil, dass die Herstellungskosten günstiger sind.

Gemäß einer nicht beanspruchten Ausführungsform kann der Adapter als Führungseinrichtung auch eine Schiene aufweisen, die in eine entsprechende Nut der Aufnahmeeinrichtung eingreift. Andere dem Fachmann bekannte und geeignete Führungseinrichtungen können alternativ oder zusätzlich an dem Adapter bzw. der Aufnahmeeinrichtung vorgesehen werden.

Gemäß einer bevorzugten Ausführungsform kann die Aufnahmeeinrichtung an ihren bezogen auf die Längsrichtung des Rahmenteils gegenüberliegenden Enden jeweils einen Verschiebeeinrichtungsabschnitt bzw. Schienenabschnitt bzw. Nutabschnitt aufweisen.

Alternativ oder zusätzlich können der Adapter und die Aufnahmeeinrichtung derart angeordnet und ausgebildet sein, dass die in Längsrichtung des Bremszylinders beim Bremsen wirkende Kraft von dem Adapter auf die Aufnahmeeinrichtung in einem Abstand von dem Rahmenteil übertragen wird, der im Wesentlichen dem Abstand des Bremszylinders von dem Rahmenteil entspricht.

Gemäß einer nicht beanspruchten Ausführungsform kann der Unterschied dieser Abstände weniger als 5mm, vorzugsweise weniger als 4mm, weiter vorzugsweise weniger als 3mm, noch weiter vorzugsweise weniger als 2mm noch weiter vorzugsweise weniger als 1mm und bevorzugt ungefähr 0mm betragen.

Je kleiner der Abstand ist, desto geringere Drehmomente treten beim Bremsen auf. Das hat den Vorteil, dass die Armatur leichter ausgebildet werden kann, oder dass höhere Bremskräfte übertragen werden können. Ebenfalls können gegebenenfalls die Verstärkungsbügel und/oder Montageplatten leichter ausgebildet werden oder ganz entfallen.

Gemäß einer bevorzugten Ausführungsform kann der Bremszylinder mit einem Klemmteil an dem Adapter befestigbar sein. Das Klemmteil kann beispielsweise eine Schelle sein.

Gemäß einer bevorzugten Ausführungsform kann der Bremszylinder mit einer Spanneinrichtung an dem Adapter befestigbar sein.

Gemäß einer nicht beanspruchten Ausführungsform kann die Spanneinrichtung eine Schnellspanneinrichtung und/oder eine mit einem Werkzeug oder einem integrierten Hebel betätigbare Spanneinrichtung sein.

Gemäß einer bevorzugten Ausführungsform kann der Adapter eine Fixiereinrichtung aufweisen, mit der der Adapter in einer bestimmten Stellung zu der Aufnahmeeinrichtung fixierbar ist. Beispielsweise kann der Bremszylinder an dem Adapter mit einem Klemmteil geeignet eingeklemmt werden. Beispielsweise kann eine Schraube vorgesehen werden, um die Verbindung zwischen Klemmteil und Adapter zu fixieren. Die gesamte Einheit kann dann mit einer Spanneinrichtung an der Aufnahmeeinrichtung angebracht werden. Zur Fixierung der Richtigen Lage können vorteilhafterweise Einlagen vorgesehen werden, die eine Voreinstellung der relativen Lage sicherstellen. Um eine Verstellung wieder zu ermöglichen, können die Einlagen entfernt werden.

Gemäß einer nicht beanspruchten Ausführungsform kann die Aufnahmeeinrichtung in einer Vertiefung des Rahmenteils vorgesehen sein.

Gemäß einer nicht beanspruchten Ausführungsform kann der an der Aufnahmeeinrichtung befestigte Adapter in das Rahmenteil eintauchen.

Gemäß einer nicht beanspruchten Ausführungsform kann der an dem Adapter befestigte Bremszylinder in das Rahmenteil eintauchen.

Gemäß einer nicht beanspruchten Ausführungsform kann der Adapter mehr als 2 mm in das Rahmenteil eintauchen.

Gemäß einer nicht beanspruchten Ausführungsform kann der Adapter mehr als 4 mm in das Rahmenteil eintauchen.

Gemäß einer nicht beanspruchten Ausführungsform kann der Adapter mehr als 6 mm in das Rahmenteil eintauchen.

Gemäß einer nicht beanspruchten Ausführungsform kann der Adapter mehr als 8 mm in das Rahmenteil eintauchen.

Gemäß einer nicht beanspruchten Ausführungsform kann der Adapter weniger als 20 mm in das Rahmenteil eintauchen.

Gemäß einer nicht beanspruchten Ausführungsform kann der Adapter weniger als 18 mm in das Rahmenteil eintauchen.

Gemäß einer nicht beanspruchten Ausführungsform kann der Adapter weniger als 16 mm in das Rahmenteil eintauchen.

Gemäß einer nicht beanspruchten Ausführungsform kann der Adapter weniger als 14 mm in das Rahmenteil eintauchen.

Gemäß einer nicht beanspruchten Ausführungsform kann der Adapter weniger als 12 mm in das Rahmenteil eintauchen.

Gemäß einer nicht beanspruchten Ausführungsform kann der Adapter ungefähr 10 mm in das Rahmenteil eintauchen.

Gemäß einer nicht beanspruchten Ausführungsform kann das Rahmenteil eine entsprechend tiefe Vertiefung aufweisen, in der die Aufnahmeeinrichtung vorgesehen ist.

Diese Ausführungen der Erfindung ermöglichen eine leichtere Bauweise mit weniger Bauteilen, weil die die Aufnahmeeinrichtung in das Rahmenteil (z.B. Gabelbein bzw. Hinterbaustrebe) integriert werden kann.

Auch optisch kann die Felgenbremse integriert werden. Dazu kann alternativ oder zusätzlich der Adapter mit seiner Außenseite bündig mit dem Rahmenteil ausgebildet sein. Dabei kann die Felgenbremse hinter dem Rahmenteil versteckt ausgebildet sein.

Erfindungsgemäß wird eine hydraulische Felgenbremse mit einer erfindungsgemäßen Nehmerarmatur angegeben.

Gemäß einer nicht beanspruchten Ausführung der Erfindung wird auch Fahrrad mit einer erfindungsgemäßen hydraulischen Felgenbremse angegeben, wobei an dem Rahmenteilen erfindungsgemäße Aufnahmeeinrichtungen vorgesehen sind.

Gemäß einer bevorzugten Ausführungsform können für die Nehmerarmatur zwei Aufnahmeeinrichtungen zur Aufnahme jeweils eines Adapters vorgesehen sein.

Gemäß einer bevorzugten Ausführungsform können die Aufnahmeeinrichtungen an gegenüberliegenden Rahmenteilen angeordnet und mit einer Verstärkungsbrücke miteinander verbunden sein.

Gemäß einer bevorzugten Ausführungsform kann dabei die Verstärkungsbrücke eine Aussparung zur Aufnahme der Bremsleitung aufweisen.

Gemäß einer bevorzugten Ausführungsform kann die Breite der Aussparung zur Aufnahme der Bremsleitung zumindest an seinem der Nehmerarmatur abgewandten Seite mehr als das 1,5-fache, vorzugsweise mehr als das 1,6-fache, weiter vorzugsweise mehr als das 1,7-fache, noch weiter vorzugsweise mehr als das 1,8-fache, noch weiter vorzugsweise mehr als das 1,9-fache und bevorzugt ungefähr das Doppelte des Außendurchmessers der Bremsleitung betragen.

Gemäß einer nicht beanspruchten Ausführungsform kann die Breite der Aussparung zur Aufnahme der Bremsleitung zumindest an seinem der Nehmerarmatur abgewandten Seite weniger als das 2,5-fache, vorzugsweise weniger als das 2,4-fache, weiter vorzugsweise weniger als das 2,3-fache, noch weiter vorzugsweise weniger als das 2,2-fache, noch weiter vorzugsweise weniger als das 2,1-fache und bevorzugt ungefähr das Doppelte des Außendurchmessers der Bremsleitung betragen.

Gemäß einer nicht beanspruchten Ausführungsform kann die Aussparung zur Aufnahme der Bremsleitung an seiner der Nehmerarmatur zugewandten Seite entsprechend ausgebildet sein.

Gemäß einer nicht beanspruchten Ausführungsform kann die Aussparung zur Aufnahme der Bremsleitung insgesamt breiter als der Durchmesser der Bremsleitung ausgebildet sein.

Gemäß einer nicht beanspruchten Ausführungsform können die erfindungsgemäßen Nehmerarmaturen für hydraulische Bremsen verwendet werden bzw. Teil davon sein. Insbesondere können die erfindungsgemäßen Nehmerarmaturen Teile von hydraulischen Felgenbremsen von Fahrrädern oder anderen lenkergeführten Fahrzeugen sein bzw. dafür verwendet werden.

Gemäß einer nicht beanspruchten Ausführungsform kann das Material des Gehäuses der Nehmerarmatur Druckguss und/oder faserverstärkten Kunststoff, insbesondere einen kohlefaserverstärkten Kunststoff, beispielsweise einen Duroplast und/oder einen Thermoplast, aufweisen.

Die Erfindung wird im Folgenden anhand der in den Figuren gezeigten Ausführungsbeispiele näher beschrieben.
- Fig. 1: zeigt eine Seitenansicht einer Nehmerarmatur gemäß einer Ausführung der Erfindung, die an einer Aufnahmeeinrichtung eines Rahmenteils angebracht ist.
- Fig. 2: zeigt eine Vorderansicht der Nehmerarmatur von Fig. 1.
- Fig. 3: zeigt eine Schnittansicht der Nehmerarmatur von Fig. 1 entlang der Linien III-III von Fig. 1.
- Fig. 4: zeigt eine Schnittansicht der Nehmerarmatur von Fig. 1 entlang der Linien IV-IV von Fig. 1.
- Fig. 5: zeigt eine perspektivische Ansicht der Nehmerarmatur von Fig. 1 von schräg hinten ohne die Aufnahmeeinrichtung des Rahmenteils.
- Fig. 6: zeigt eine perspektivische Ansicht der Aufnahmeeinrichtung von Fig. 1.
- Fig. 7: zeigt eine perspektivische Ansicht einer Aufnahmeeinrichtung gemäß einer alternativen Ausführung der Erfindung.
- Fig. 8: zeigt eine Seitenansicht der Nehmerarmatur von Fig. 1, die an einer Aufnahmeeinrichtung eines Rahmenteils angebracht ist.
- Fig. 9: zeigt eine Schnittansicht der Nehmerarmatur von Fig. 1 entlang der Linien IX-IX von Fig. 2.
- Fig. 10: zeigt eine der Fig. 9 entsprechende Schnittansicht einer Nehmerarmatur gemäß einer alternativen Ausführung der Erfindung.
- Fig. 11: zeigt eine der Fig. 1 entsprechende Seitenansicht der Nehmerarmatur von Fig. 10.
- Fig. 12: zeigt eine Seitenansicht der Nehmerarmatur von Fig. 1 an einer Hinterbaustrebe.
- Fig. 13: zeigt eine Seitenansicht der Nehmerarmatur von Fig. 1 mit einer Federgabel.
- Fig. 14: zeigt eine der Fig. 12 entsprechende Seitenansicht einer Nehmerarmatur gemäß einer alternativen Ausführung der Erfindung.
- Fig. 15: zeigt eine der Fig. 9 entsprechende Schnittansicht der Nehmerarmatur von Fig. 10.
- Fig. 16: zeigt eine schematische Darstellung einer erfindungsgemäßen Nehmerarmatur mit einer Aufnahmeeinrichtung, die an einem Rahmenteil angebracht ist, wobei die Nehmerarmatur von der Aufnahmeeinrichtung getrennt dargestellt ist, um die Konturen der Führungseinrichtungen besser darstellen zu können.
- Fig. 17: zeigt eine schematische Darstellung der Nehmerarmatur von Fig. 16, wobei die Nehmerarmatur an der Aufnahmeeinrichtung angeordnet ist.

In der Beschreibung der Ausführungsbeispiele werden folgende Bezugszeichen verwendet:
- 1: Nehmerarmatur
- 10: Bremszylinder
- 11: Leitungsanschlussabschnitt
- 12: Bremsbelagaufnahme
- 13: Einstelleinrichtung
- 14: Bremsleitung
- 15: Bremskolben
- 20: Bremsbelag
- 30: Adapter
- 30a: Ende
- 30b: Ende
- 31: Eingriffeinrichtung (z.B. eine Nut oder eine Schiene zur Führung und Abstützung des Adapters an der Verschiebeeinrichtung 71 der Aufnahmeeinrichtung 70)
- 31a: Eingriffeinrichtungsabschnitt
- 31b: Eingriffeinrichtungsabschnitt
- 32: Wandung
- 32a: Wandabschnitt
- 32b: Wandabschnitt
- 33: Wandung
- 33a: Wandabschnitt
- 33b: Wandabschnitt
- 34: Durchgang
- 35: Durchgang
- 36: Aufnahme
- 37: Nut
- 40: Klemmteil
- 41: Nut
- 42: Eingriffabschnitt
- 50: Schnellspanneinrichtung
- 51: Nut
- 52: Schnellspannschraube
- 53: Schnellspannhebel
- 54: Spannbolzen
- 55: Schnellspannerlagerung
- 57: Fixiereinrichtung
- 58: Einlage
- 59: Klemmschraube
- 60: Rahmenteil (z.B. Gabelbein oder Hinterbaustrebe)
- 61: Gabelbein
- 62: Gabelbrücke
- 63: Hinterbaustrebe
- 70: Aufnahmeeinrichtung
- 71: Verschiebeeinrichtung (z.B. Schiene oder Nut)
- 72: Verschiebeeinrichtungsabschnitt niedriger Höhe
- 73: Verschiebeeinrichtungsabschnitt mittlerer Höhe
- 74: Verschiebeeinrichtungsabschnitt mittlerer Höhe
- 75: Verschiebeeinrichtungsabschnitt großer Höhe
- 76: Verschiebeeinrichtungsabschnitt großer Höhe
- 77: Schraube
- 78: Stehbolzen (zur Aufnahme der Schnellspannschraube)
- 79: Aussparung
- 80: Verstärkungsbrücke
- 81: Aussparung zur Aufnahme Bremsleitung
- 81a: der Nehmerarmatur zugewandte Seite
- 81b: der Nehmerarmatur abgewandte Seite
- 82: Wandung
- 83: Wandung
- 84: Abdeckung
- 90: Spanneinrichtung
- 91: Nut
- 92: Spannschraube
- 93: Hülse
- 94: Spannbolzen
- 95: Betätigungshebel
- ***L***: Längsrichtung des Rahmenteils
- ***V***: möglicher Verstellweg des Adapters auf der Verschiebeeinrichtung
- ***K***: Längsrichtung des Bremszylinders 10 (entspricht der Bewegungsrichtung des Bremskolbens 15)
- A: Länge des Adapters 30 (bezogen auf die Längsrichtung (L) des Rahmenteils)
- B: Länge der Verschiebeeinrichtung 71 (bezogen auf die Längsrichtung (L) des Rahmenteils)
- C: Abstand der Kraftübertragung von dem Rahmenteil
- D: Abstand des Bremszylinders vom Rahmenteil (entspricht dem Abstand der Mitte des Bremskolbens von dem Rahmenteil)

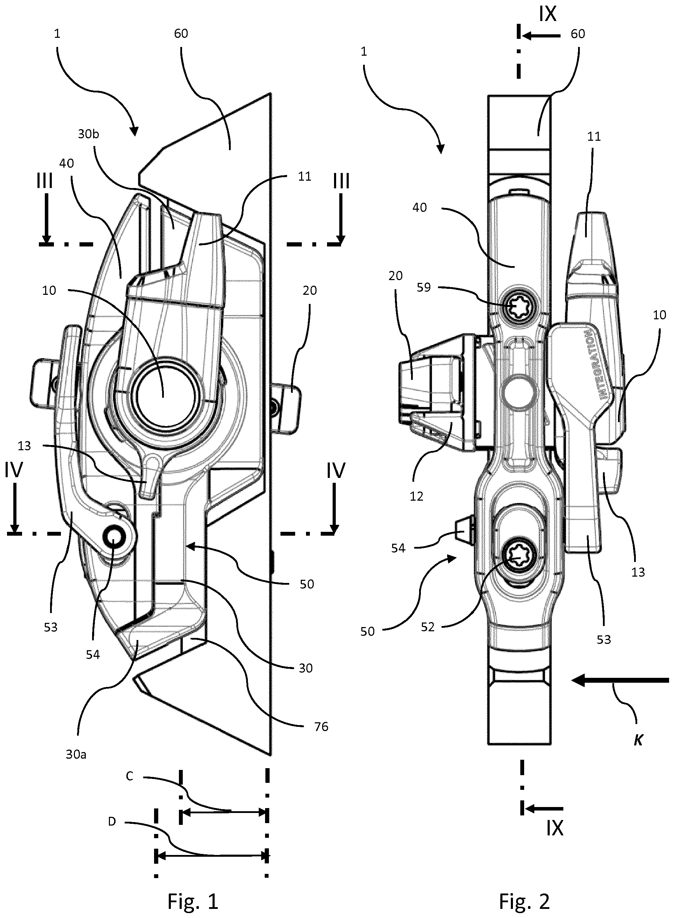

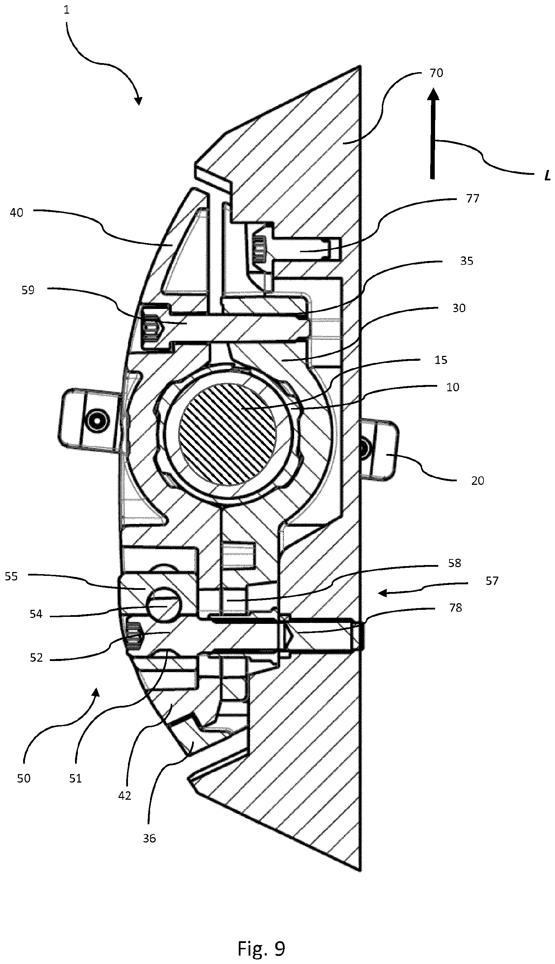

Die Figuren 1 bis 6, 8 bis 9 und 12 bis 13 zeigen eine Nehmerarmatur 1 gemäß einer Ausführung der Erfindung.

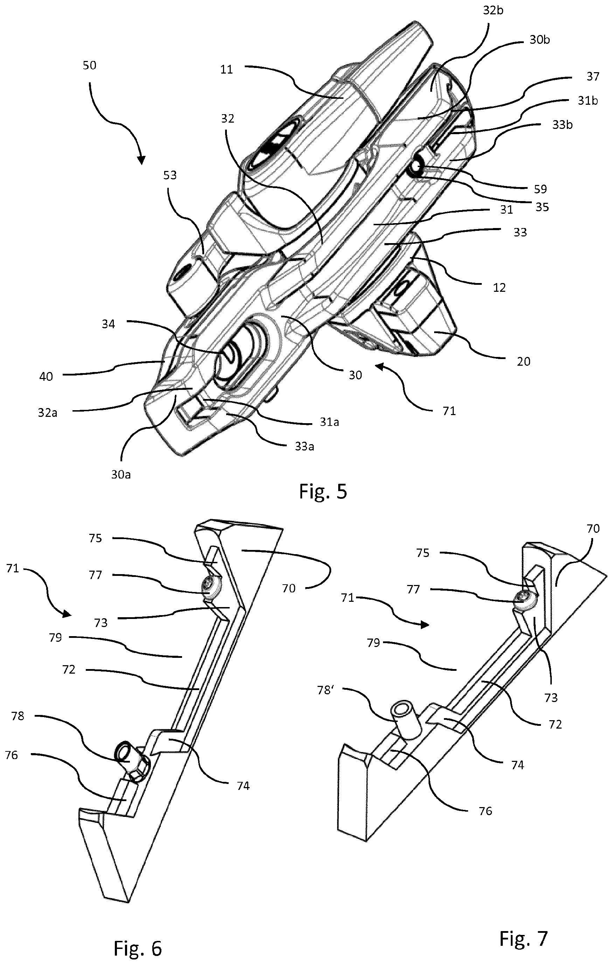

Figur 7 zeigt eine Variante der Aufnahmeeinrichtung 70.

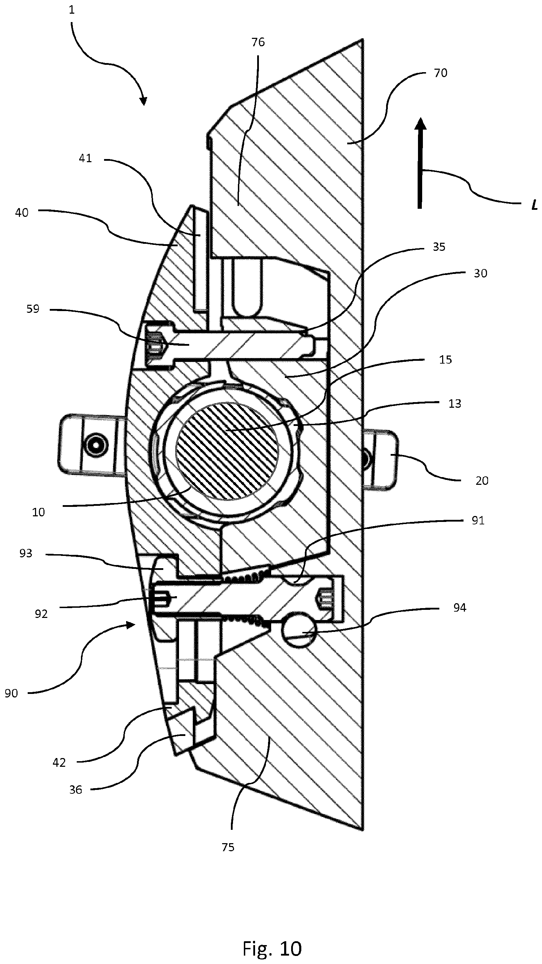

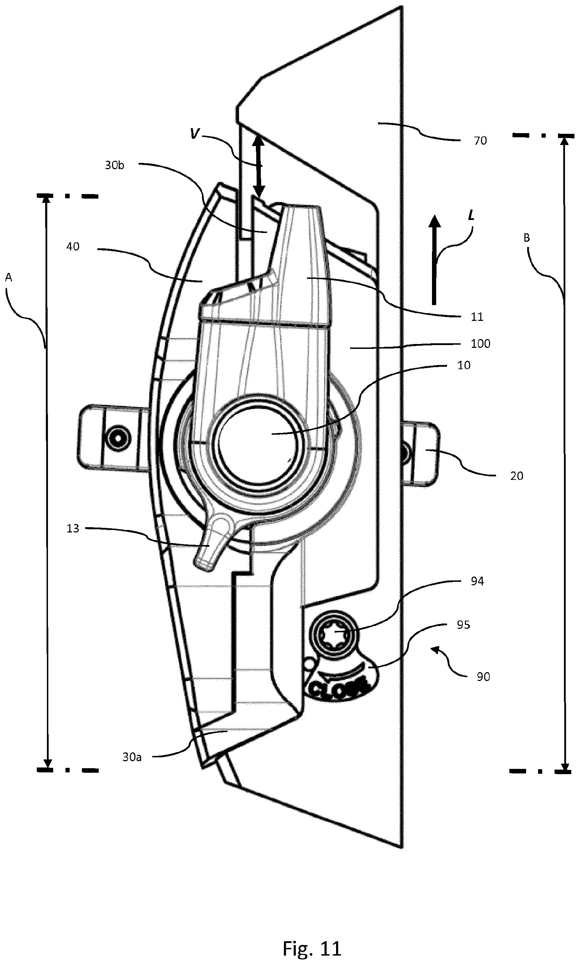

Die Figuren 10 und 11 zeigen eine alternative Ausführungsform der Erfindung.

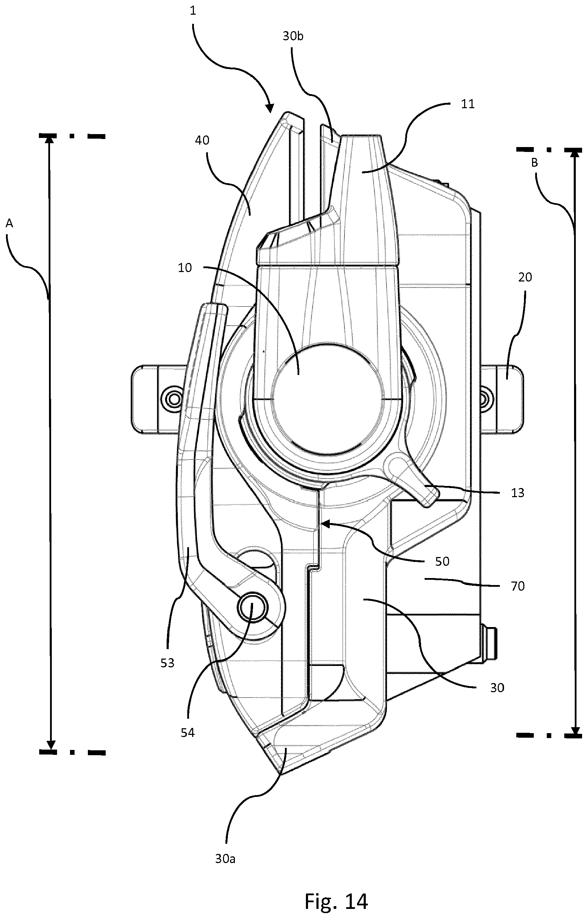

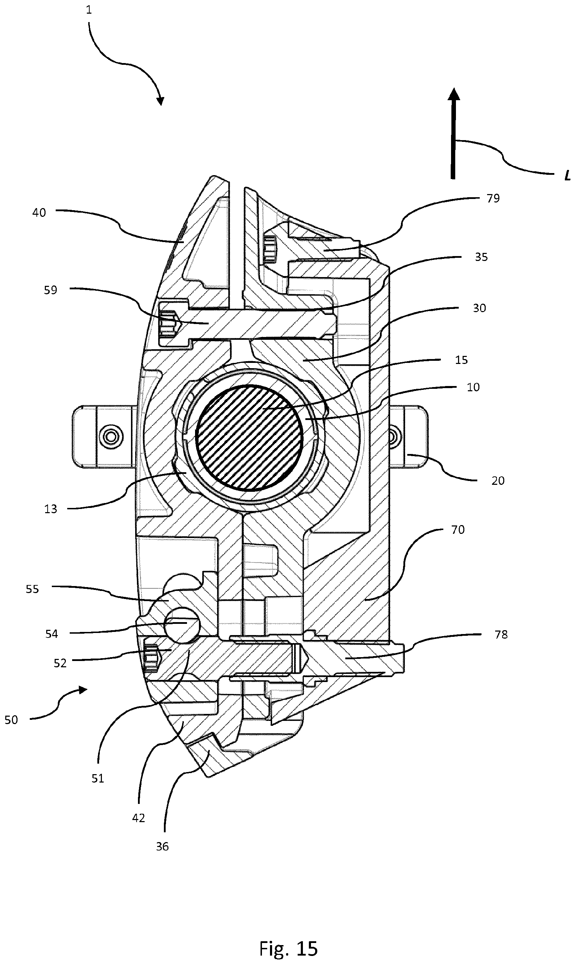

Die Figuren 14 und 15 zeigen eine alternative Ausführungsform der Erfindung.

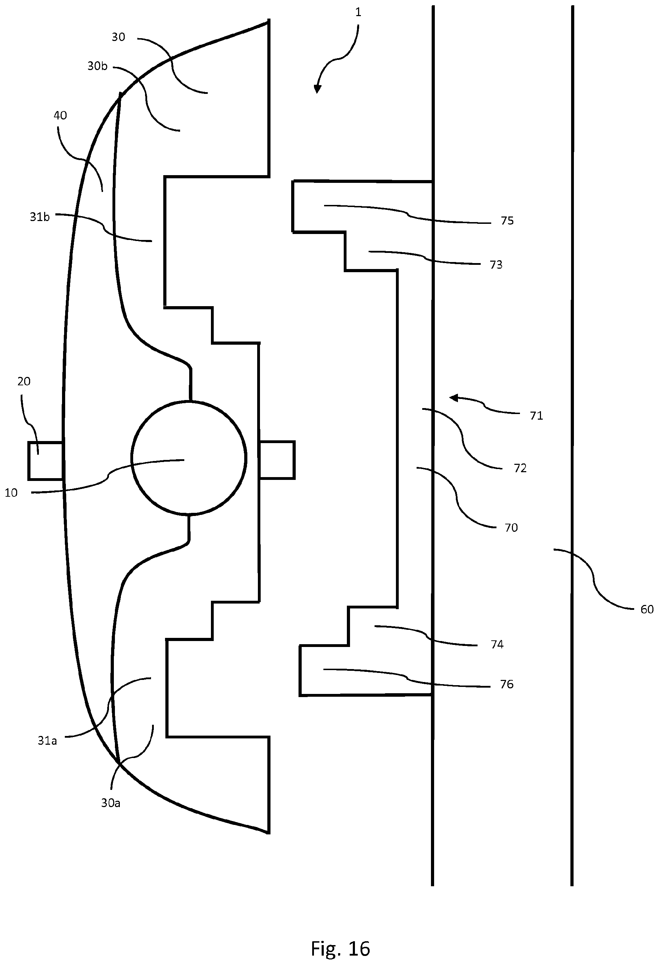

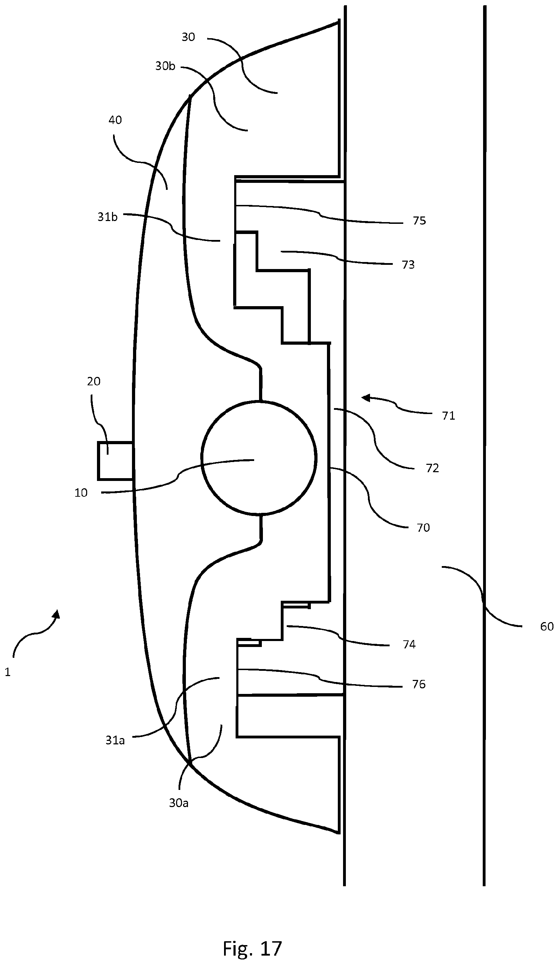

Die Figuren 16 und 17 zeigen eine alternative Ausführungsform der Erfindung.

In der Beschreibung werden für sich entsprechende Teile der verschiedenen Ausführungsformen die gleichen Bezugszeichen verwendet. Im Folgenden wird zunächst die erste Ausführungsform der Erfindung beschreiben. Betreffend die anderen Ausführungsformen wird auf diese Beschreibung und die anderen Beschreibungen verwiesen. Im Übrigen werden vor allem nur die Unterschiede zu der zuerst beschriebenen und den anderen Ausführungsformen beschrieben.

In einigen Figuren sind folgenden Richtungen dargestellt:
Die Längsrichtung L des Rahmenteils ist angegeben, die im Wesentlichen der Mittelachse des Rahmenrohrs bzw. des Gabelbeins entspricht. Entlang der Längsrichtung L kann der Adapter 30 über einen möglichen Verstellweg V auf der Verschiebeeinrichtung 71 der Aufnahmeeinrichtung 70 verschoben werden.

Die Längsrichtung K des Bremszylinders 10 entspricht der Bewegungsrichtung des Bremskolbens 15.

Zur Veranschaulichung sind des Weiteren in einigen Figuren die folgenden Abstände dargestellt:
Mit A wird die Länge des Adapters 30 bezogen auf die Längsrichtung **L** des Rahmenteils angegeben, d.h. die Länge der Eingriffeinrichtung 31 des Adapters 30, die sich von seinen einem Ende 30a zu seinem gegenüberliegenden Ende 30b ggf. mit Unterbrechungen erstreckt.

Mit B wird die Länge der Verschiebeeinrichtung 71 der Aufnahmeeinrichtung 70 bezogen auf die Längsrichtung **L** des Rahmenteils 60 angegeben.

Mit C wird der Abstand der Kraftübertragung von dem Adapter 30 auf das Rahmenteil 60 bezogen auf die Längsrichtung **K** des Bremskolbens 15 angegeben.

Mit D wird der Abstand des Bremszylinders 10 bzw. des Bremskolbens 15 vom Rahmenteil angegeben (jeweils bezogen auf die Mitte des Bremskolbens bzw. des Bremszylinders).

Die Nehmerarmatur 1 weist einen Bremszylinder 10 auf, der zwischen einen Adapter 30 und ein Klemmteil 40 geklemmt ist.

Der Bremszylinder 10 weist ein einen Kolbenraum enthaltendes Gehäuse auf, in dem ein darin verschiebbarer Kolben 15 und ein Druckraum angeordnet sind.

Der Bremszylinder 10 weist einen Leitungsanschlussabschnitt 11 auf, an dem die in einigen Figuren gezeigte Bremsleitung 14 auf einer dem Fachmann bekannten Weise angebracht ist.

Der Bremszylinder 10 ist zwischen einem Adapter 30 und einem Klemmteil 40 eingespannt.

Der Bremszylinder weist eine Bremsbelagaufnahme 12 auf, in der ein Bremsbalg 20 aufgenommen ist.

Um den Abstand von dem Bremsbelag 20 von der nicht dargestellten Felge einstellen zu können, ist eine Einstelleinrichtung 13 vorgesehen, mit der der Bremszylinder durch Drehen der Einstellrichtung entlang seiner Achse in Richtung der Felge verstellbar ist.

In dem Bremszylinder 10 ist ein Bremskolben 15 entlang der Achse des Bremszylinders verschiebbar angeordnet.

Der Adapter 30 weist eine Eingriffeinrichtung 31 auf, mit der die Nehmerarmatur 1 an einer Aufnahmeeinrichtung 70 montiert werden kann, die mit einem Rahmenteil 60 des Fahrzeugs verbunden ist bzw. darin ausgebildet ist.

Die Eingriffeinrichtung 31 kann z.B. eine Nut oder, erfindungsgemäß, eine Schiene zur Führung und Abstützung des Adapters an einer Verschiebeeinrichtung 71 der Aufnahmeeinrichtung 70 sein. Der Adapter 30 weist gegenüberliegende Enden 30a und 30b auf. An den Enden 30a, 30b sind Eingriffeinrichtungsabschnitte 31a, 31b ausgebildet, die bei der dargestellten Ausführung nutförmig sind. Alternativ oder zusätzlich können auch schienenförmige Eingriffeinrichtungsabschnitte oder geeignet geformte Eingriffeinrichtungsabschnitte vorgesehen werden.

Die Eingriffeinrichtung 31 weist eine Wandung 32 und eine Wandung 33 auf, zwischen denen eine Nut ausgebildet ist, die mit einer entsprechenden Schiene der Aufnahmeeinrichtung 70 in Eingriff sein kann.

An dem Eingriffeinrichtungsabschnitt 31a sind entsprechende Wandabschnitte 32a, 33a vorgesehen.

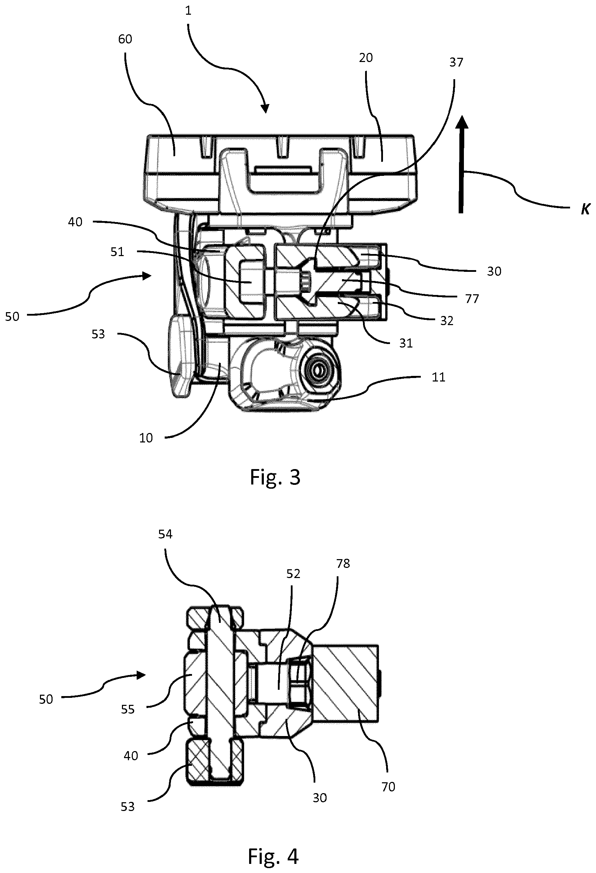

An dem Eingriffeinrichtungsabschnitt 31b sind entsprechende Wandabschnitte 32b, 33b vorgesehen. In dem Eingriffeinrichtungsabschnitt 31b ist die Nut 37 T-förmig ausgebildet, wie man am besten in Figur 3 sehen kann.

Der Bremszylinder 10 ist zwischen dem Adapter 30 und dem Klemmteil 40 angeordnet. In dem Adapter 30 sind zwei Durchgänge 34, 35 vorgesehen. In dem Durchgang 35 ist ein Innengewinde ausgebildet, damit das Klemmteil 40 mittels der Schraube 59 an dem Adapter 30 befestigt werden kann.

Der Durchgang 35 ist als Langloch ausgebildet, in dem eine Schnellspanneinrichtung 50 bzw. Spanneinrichtung 90 angeordnet werden kann, um das Klemmteil 40 mit dem Adapter 30 an der Aufnahmeeinrichtung 70 zu befestigen. Die Ausbildung des Durchgangs 35 als Langloch ist dann erforderlich, wenn eine Verstellung entlang der Längsrichtung L des Rahmenteils möglich sein soll.

An seinem Ende 30a weist dar Adapter eine Aufnahme 36 auf, in der ein Eingriffabschnitt 42 des Klemmteils 40 eingreifen kann.

Zur Montage der Nehmerarmatur 1 kann der Bremszylinder 10 mit der Einstellvorrichtung 13 auf dem Adapter 30 angeordnet werden. Dann wird das Klemmteil mit seinem Eingriffabschnitt 42 in der Aufnahme 36 angeordnet und mit der Schraube 59 an dem Adapter 30 befestigt. Anschließend kann die Nehmerarmatur 1 mit der Schnellspanneinrichtung 50 oder der Spanneinrichtung 90 an der Aufnahmeeinrichtung 70 befestigt werden. Um eine Voreinstellung der relativen Lage zu gewährleisten kann dabei in dem Durchgang 35 eine Fixiereinrichtung 58 vorgesehen sein. Die Fixiereinrichtung 58 kann beispielsweise eine Einlage bzw. ein Satz verschiedener Einlagen sein, die in den Durchgang 35 eingesetzt werden kann, um eine Voreinstellung zu schaffen.

Das ist vorteilhaft, wenn die Einstellung bereits erfolgt war oder bekannt ist, welche Einstellung erfolgen muss.

Die Schnellspanneinrichtung 50 weist eine Schnellspannschraube 52 mit einer Nut 51 auf, in der ein Spannbolzen angeordnet ist, der senkrecht zu der Schnellspannschraube 52 und in einer Schnellspannerlagerung 55 angeordnet ist. Die Schnellspanneinrichtung 50 weist einen Schnellspannhebel 55 auf, der nach oben gebogen ist. Das hat den Vorteil, dass weniger Bauraum benötigt wird.

Die Schnellspannschraube 52 kann gemäß der in Fig. 6 gezeigten Ausführung in einen Stehbolzen 78 der Aufnahmeeinrichtung 70 geschraubt werden. Alternativ kann die Schnellspannschraube 52 gemäß der in Fig. 7 gezeigten alternativen Ausführung direkt in ein Gewinde der Aufnahmeeinrichtung 70 geschraubt werden.

Alternativ zu der Schnellspanneinrichtung 50 kann eine Spanneinrichtung 90 vorgesehen werden, die in der Ausführung der Figuren 10 und 11 gezeigt ist. Die Spanneinrichtung 90 weist ebenfalls eine Spannschraube 92 mit einer Nut 91 auf, in der der Spannbolzen 94 vorgesehen ist. Hier greift die Spannschraube 91 in eine Hülse 93 mit einem Innengewinde ein. Die Spanneinrichtung 90 kann mit dem Betätigungshebel 95 gespannt und gelöst werden.

Das Rahmenteil 60 kann beispielsweise ein Gabelbein 61 oder eine Hinterbaustrebe 63 sein.

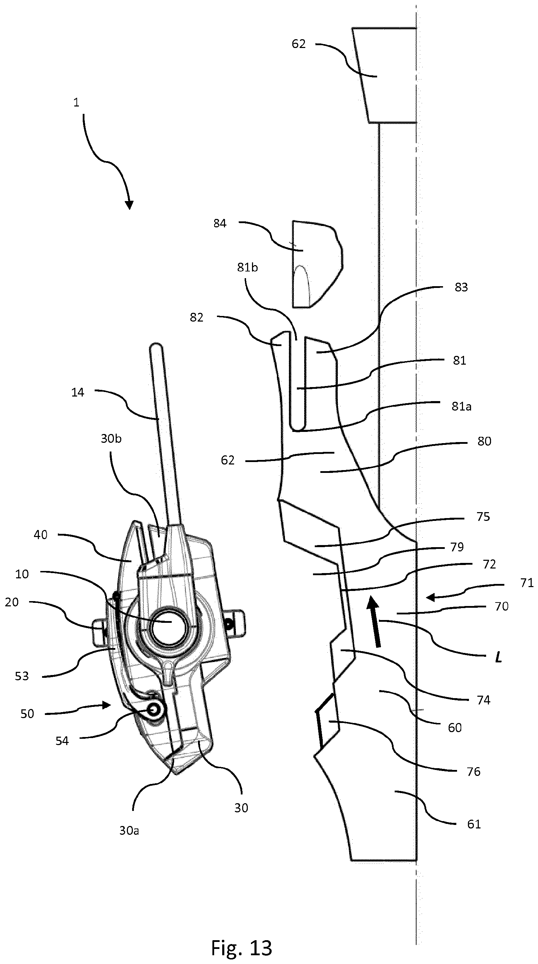

Eine Ausführungsform mit einem Gabelbein 61 ist beispielsweise in Fig. 13 gezeigt. Dort ist eine Gabelbrücke 62 vorgesehen, die auch eine Verstärkungsbrücke 80 ist.

Diese hat eine Aussparung 81 mit einer der Nehmerarmatur zugewandten Seite 81a und einer der Nehmerarmatur abgewandten Seite 81b. Die Aussparung ist durch Wandungen 82, 83 begrenzt und dient zur Aufnahme und Führung der Bremsleitung 14. Eine Abdeckung 84 ist vorgesehen, um die Bremsleitung 14 in der Aussparung zu sichern.

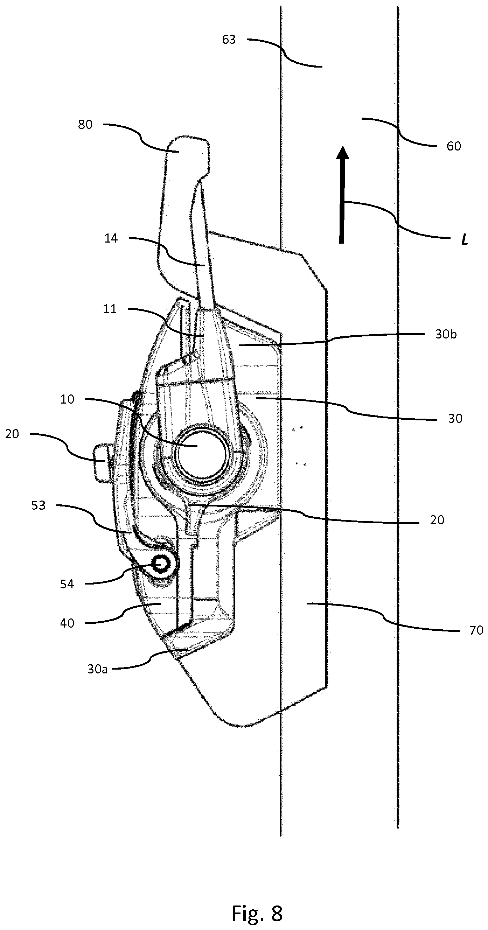

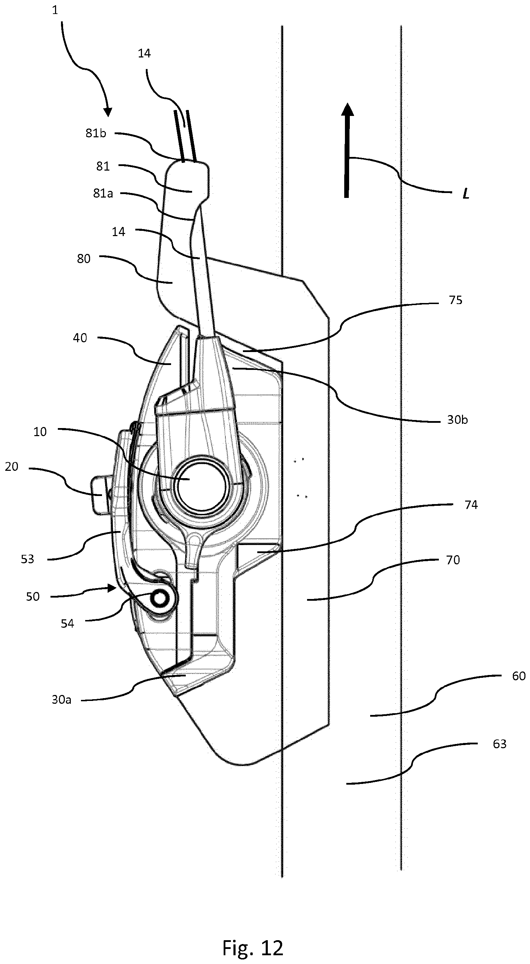

Eine Ausführungsform mit einer Hinterbaustrebe 63 ist beispielsweise in Fig. 8 bzw. Fig. 12 gezeigt. Zwischen den beiden Hinterbaustreben 63 (die vordere ist nur dargestellt) ist eine Verstärkungsbrücke 80 vorgesehen, die eine Aussparung 81 zur Aufnahme Bremsleitung 14 aufweist. Die Aussparung 81 hat eine der Nehmerarmatur zugewandte Seite 81a und eine der Nehmerarmatur abgewandte Seite 81b. Die Breite der Aussparung 81 ist an diesen Seiten größer als der Durchmesser der Bremsleitung 14, damit diese besser verlegt werden kann.

Die Aufnahmeeinrichtung 70 weist eine Verschiebeeinrichtung 71 auf. Diese kann beispielsweise als Schiene oder Nut ausgebildet sein. Die Verschiebeeinrichtung 71 umfasst in der Mitte einen Verschiebeeinrichtungsabschnitt 72 niedriger Höhe, daneben jeweils einen Verschiebeeinrichtungsabschnitt 73, 74 mittlerer Höhe, und an ihren Enden jeweils einen Verschiebeeinrichtungsabschnitt 75, 76 großer Höhe.

An dem oberen Verschiebeeinrichtungsabschnitt 73 mittlerer Höhe ist eine Schraube 77 vorgesehen, damit dieser Verschiebeeinrichtungsabschnitt 73 einen T-förmigen Querschnitt aufweist.

Im unteren Bereich ist ein Stehbolzen 78 zur Aufnahme der Schnellspannschraube 52 vorgesehen (Fig.6). Alternativ ist eine Bohrung 78' vorgesehen, in die die Schnellspannschraube 52 direkt eingeschraubt werden kann (Fig. 7).

In der Mitte der Aufnahmeeinrichtung 70 ist eine Aussparung 79 vorgesehen, um Platz für den Bremszylinder 10 zu schaffen.

Bei der in den Figuren 14 und 15 gezeigten Variante ist der Adapter 30 etwas länger ausgebildet als die Aufnahmeeinrichtung 70. Daher ist A kleiner als B und die Kraftübertragung erfolgt vornehmlich an beiden Enden der Aufnahmevorrichtung 70, d.h. dass der Adapter 30 je nach Stellung an einer oder beiden Seiten über die Aufnahmeeinrichtung 70 hinaussteht.

Bei der in den Figuren 16 und 17 gezeigten Variante ist der Adapter 30 ebenfalls etwas länger ausgebildet als die Aufnahmeeinrichtung 70. Hier kann der Adapter 30 die Aufnahmeeinrichtung 70 vollkommen abdecken, wodurch sich ein optisch gefälliges Erscheinungsbild ergibt. Außerdem wird die Aufnahmeeinrichtung 70 gegenüber Verschmutzung geschützt.

Wie in Fig. 1 gezeigt, ist der Abstand C vom Rahmenteil, an dem die Krafteinleitung von dem Adapter 30 auf die Aufnahmeeinrichtung 70 vornehmlich erfolgt, d.h. an den Enden 30a und 30b, nur unwesentlich kleiner als der Abstand D der Mitte des Bremskolbens 15 von dem Rahmenteil. Dadurch entstehen nur geringe Drehmomente infolge der besseren Kraftabstützung. Der Abstand C kann noch vergrößert werden, wenn wie in Fig. 10 gezeigt eine Nut in dem Klemmteil 40 vorgesehen wird, in die der entsprechende Führungseinrichtungsabschnitt 75 großer Höhe eintauchen kann. Eine derartige Nut 41 kann an beiden Enden des Klemmteils 40 vorgesehen sein. Das Klemmteil 40 kann an den Enden auch gabelartig ausgebildet sein, so dass die Führungseinrichtungsabschnitt 75, 76 noch länger ausgebildet sein können, so dass der Abstand C größer wird.

## Patentansprüche

1. Hydraulische Felgenbremse mit einer Nehmerarmatur (1) insbesondere eines lenkergeführten Fahrzeugs, insbesondere eines Fahrrads, mit einem Bremszylinder (10) und einem Adapter (30) zur Befestigung an einer Aufnahmeeinrichtung (70), die an einem Rahmenteil (60) des Fahrzeugs vorgesehen ist, wobei der Adapter (30) an seinen beiden bezogen auf die Längsrichtung (L) des Rahmenteils (60) gegenüberliegenden Enden (30a, 30b) jeweils einen Eingriffeinrichtungsabschnitt (31a, 31b) zum Eingriff mit der Aufnahmeeinrichtung (70) aufweist, und dass der Adapter (30) bezogen auf die Längsrichtung (L) des Rahmenteils (60) eine kleinere Abmessung als die Aufnahmeeinrichtung (70) aufweist,
wobei die Aufnahmeeinrichtung (70) eine Verschiebeeinrichtung (71) aufweist, auf der der Adapter entlang der Längsrichtung (L) des Rahmenteils (60) um einen möglichen Verstellweg (V) verschiebbar ist, und **dadurch gekennzeichnet,**
**dass** die Eingriffeinrichtungsabschnitte (31a, 31b) zur Führung und Abstützung des Adapters (30) an der Verschiebeeinrichtung (71) der Aufnahmeeinrichtung (70) schienenförmig ausgebildet sind.

2. Hydraulische Felgenbremse nach Anspruch 1, **dadurch gekennzeichnet, dass** die Eingriffeinrichtungsabschnitte (31a, 31b) jeweils eine Nut aufweisen.

3. Hydraulische Felgenbremse nach Anspruch 2, **dadurch gekennzeichnet, dass** die Nuten T-förmig ausgebildet sind.

4. Hydraulische Felgenbremse nach einem der vorhergehenden Ansprüche, **dadurch gekennzeichnet, dass** der Adapter (30) bezogen auf die Längsrichtung (L) des Rahmenteils (60) in verschiedenen Stellungen an der Aufnahmeeinrichtung (70) montierbar ist.

5. Hydraulische Felgenbremse nach einem der vorhergehenden Ansprüche, **dadurch gekennzeichnet, dass** bezogen auf die Längsrichtung (L) des Rahmenteils (60) der mögliche Verstellweg (V) dem Unterschied der Länge (B) der Verschiebeeinrichtung (71) zu der Länge (A) des Adapters (30) entspricht.

6. Hydraulische Felgenbremse nach einem der vorhergehenden Ansprüche, **dadurch gekennzeichnet, dass** bezogen auf die Längsrichtung (L) des Rahmenteils (60) der mögliche Verstellweg (V) mehr als 1mm, vorzugsweise mehr als 2mm, weiter vorzugsweise mehr als 4mm, noch weiter bevorzugt mehr als 4mm und bevorzugt ungefähr 5mm beträgt.

7. Hydraulische Felgenbremse nach einem der vorhergehenden Ansprüche, **dadurch gekennzeichnet, dass** bezogen auf die Längsrichtung (L) des Rahmenteils (60) der mögliche Verstellweg (V) weniger als 11mm, vorzugsweise weniger als 9mm, weiter vorzugsweise weniger als 8mm, noch weiter vorzugsweise weniger als 7mm und bevorzugt weniger als 6mm beträgt.

8. Hydraulische Felgenbremse nach einem der vorhergehenden Ansprüche, **dadurch gekennzeichnet, dass** der Adapter (30) eine Fixiereinrichtung (36) aufweist, mit der der Adapter (30) in einer bestimmten Stellung zu der Aufnahmeeinrichtung (70) fixierbar ist.

9. Hydraulische Felgenbremse nach einem der vorhergehenden Ansprüche, **dadurch gekennzeichnet, dass** die Aufnahmeeinrichtung (70) an ihren bezogen auf die Längsrichtung (L) des Rahmenteils (60) gegenüberliegenden Enden (70a, 70b) jeweils einen Verschiebeeinrichtungsabschnitt (75, 76) aufweist.

10. Hydraulische Felgenbremse nach einem der vorhergehenden Ansprüche, **dadurch gekennzeichnet, dass** der Adapter (30) und die Aufnahmeeinrichtung (70) derart angeordnet und ausgebildet sind, dass die in Längsrichtung (K) des Bremszylinders (10) beim Bremsen wirkende Kraft von dem Adapter (30) auf die Aufnahmeeinrichtung (71) in einem Abstand (C) von dem Rahmenteil übertragen wird, der im Wesentlichen dem Abstand des Bremszylinders (D) von dem Rahmenteil entspricht.

11. Hydraulische Felgenbremse nach einem der vorhergehenden Ansprüche, **dadurch gekennzeichnet, dass** der Bremszylinder (10) mit einem Klemmteil (40) an dem Adapter (30) befestigbar ist.

12. Hydraulische Felgenbremse nach einem der vorhergehenden Ansprüche, **dadurch gekennzeichnet, dass** der Bremszylinder (10) mit einer Spanneinrichtung (50; 90) an dem Adapter (30) befestigbar ist.

13. Hydraulische Felgenbremse nach einem der vorhergehenden Ansprüche, mit zwei Aufnahmeeinrichtungen (70) zur Aufnahme jeweils eines Adapters (30), wobei die Aufnahmeeinrichtungen an gegenüberliegenden Rahmenteilen (60) angeordnet und mit einer Verstärkungsbrücke (80) miteinander verbunden sind, wobei die Verstärkungsbrücke (80) eine Aussparung (81) zur Aufnahme der Bremsleitung (14) aufweist.

14. Hydraulische Felgenbremse nach Anspruch 13, **dadurch gekennzeichnet, dass** die Breite der Aussparung (81) zur Aufnahme der Bremsleitung zumindest an seinem der Nehmerarmatur (1) abgewandten Seite (81b) mehr als das 1,5-fache, vorzugsweise mehr als das 1,6-fache, weiter vorzugsweise mehr als das 1,7-fache, noch weiter vorzugsweise mehr als das 1,8-fache, noch weiter vorzugsweise mehr als das 1,9-fache und bevorzugt ungefähr das Doppelte des Außendurchmessers der Bremsleitung (14) beträgt.

## Claims

1. Hydraulic rim brake with a slave fitting (1), in particular of a handlebar-steered vehicle, in particular a bicycle, comprising a brake cylinder (10) and an adapter (30) for securing to a receiving device (70), which is provided on a frame part (60) of the vehicle, the adapter (30) having an engagement device portion (31a, 31b) for engaging with the receiving device (70) at the two adapter ends (30a, 30b) lying opposite each other with respect to the longitudinal direction (L) of the frame part (60), and that the adapter (30) has a smaller dimension in the longitudinal direction (L) of the frame part (60) than the receiving device (70),
the receiving device (70) having a moving device (71) on which the adapter can be moved along the longitudinal direction (L) of the frame part (60) by a possible adjustment path (V), and **characterized in that** the engagement device portions (31a, 31b) for guiding and supporting the adapter (30) on the moving device (71) of the receiving device (70) are designed in the form of rails.

2. Hydraulic rim brake according to claim 1, **characterized in that** each of the engagement device portions (31a, 31b) has a groove.

3. Hydraulic rim brake according to claim 2, **characterized in that** the grooves are T-shaped.

4. Hydraulic rim brake according to any of the preceding claims, **characterized in that** the adapter (30) can be mounted on the receiving device (70) in different positions with respect to the longitudinal direction (L) of the frame part (60).

5. Hydraulic rim brake according to any of the preceding claims, **characterized in that**, with respect to the longitudinal direction (L) of the frame part (60), the possible adjustment path (V) corresponds to the difference between the length (B) of the moving device (71) and the length (A) of the adapter (30).

6. Hydraulic rim brake according to any of the preceding claims, **characterized in that**, relative to the longitudinal direction **(L)** of the frame part (60), the possible adjustment path **(V)** is more than 1 mm, preferably more than 2mm, more preferably more than 4mm, even more preferably more than 4mm and preferably about 5mm.

7. Hydraulic rim brake according to any of the preceding claims, **characterized in that**, with respect to the longitudinal direction **(L)** of the frame part (60), the possible adjustment path **(V)** is less than 11 mm, preferably less than 9mm, more preferably less than 8mm, even more preferably less than 7mm and preferably less than 6mm.

8. Hydraulic rim brake according to any of the preceding claims, **characterized in that** the adapter (30) has a fixing device (36) with which the adapter (30) can be fixed in a certain position relative to the receiving device (70).

9. Hydraulic rim brake according to any of the preceding claims, **characterized in that** the receiving device (70) has a moving device portion (75, 76) at each of its ends (70a, 70b) lying opposite with each other with respect to the longitudinal direction (L) of the frame part (60).

10. Hydraulic rim brake according to any of the preceding claims, **characterized in that** the adapter (30) and the receiving device (70) are arranged and formed in such a way that the force acting in the longitudinal direction (K) of the brake cylinder (10) during braking is transmitted from the adapter (30) to the receiving device (71) at a distance (C) from the frame part which distance corresponds substantially to the distance of the brake cylinder (D) from the frame part.

11. Hydraulic rim brake according to any of the preceding claims, **characterized in that** the brake cylinder (10) can be fastened to the adapter (30) by means of a clamping part (40).

12. Hydraulic rim brake according to any of the preceding claims, **characterized in that** the brake cylinder (10) can be fastened to the adapter (30) by means of a clamping device (50; 90).

13. Hydraulic rim brake according to any of the preceding claims, comprising two receiving devices (70) for receiving in each case one adapter (30), the receiving devices being arranged on opposite frame parts (60) and connected to one another by a reinforcing bridge (80), the reinforcing bridge (80) having a recess (81) for receiving the brake line (14).

14. Hydraulic rim brake according to claim 13, **characterized in that** the width of the recess (81) for receiving the brake line is more than 1.5 times, preferably more than 1, 6 times, more preferably more than 1.7 times, still more preferably more than 1.8 times, even more preferably more than 1.9 times and preferably approximately twice the outer diameter of the brake line (14) at least on its side (81b) facing away from the slave fitting (1).

## Revendications

1. Frein hydraulique sur jante, comportant une garniture réceptrice (1), en particulier d'un véhicule guidé par le guidon, en particulier d'une bicyclette, comportant un cylindre de frein (10) et un adaptateur (30) destiné à être fixé sur un dispositif de réception (70) prévu sur une partie de cadre (60) du véhicule,
dans lequel
l'adaptateur (30) présente à chacune de ses deux extrémités (30a, 30b), opposées par rapport à la direction longitudinale (L) de la partie de cadre (60), une portion de dispositif d'engagement (31a, 31b) destinée à s'engager avec le dispositif de réception (70), et l'adaptateur (30) présente une dimension inférieure à celle du dispositif de réception (70) par rapport à la direction longitudinale (L) de la partie de cadre (60),
le dispositif de réception (70) comprend un dispositif de translation (71) sur lequel l'adaptateur peut être translaté d'un trajet de réglage possible (V) le long de la direction longitudinale (L) de la partie de cadre (60),
**caractérisé en ce que**
les portions de dispositif d'engagement (31a, 31b) sont réalisées en forme de rails pour guider et soutenir l'adaptateur (30) sur le dispositif de translation (71) du dispositif de réception (70).

2. Frein hydraulique sur jante selon la revendication 1,
**caractérisé en ce que**
les portions de dispositif d'engagement (31a, 31b) présentent chacune une rainure.

3. Frein hydraulique sur jante selon la revendication 2,
**caractérisé en ce que**
les rainures sont réalisées en forme de T.

4. Frein hydraulique sur jante selon l'une des revendications précédentes, **caractérisé en ce que**
l'adaptateur (30) peut être monté sur le dispositif de réception (70) dans différentes positions par rapport à la direction longitudinale (L) de la partie de cadre (60).

5. Frein hydraulique sur jante selon l'une des revendications précédentes, **caractérisé en ce que**
par rapport à la direction longitudinale (L) de la partie de cadre (60), le trajet de réglage possible (V) correspond à la différence entre la longueur (B) du dispositif de translation (71) et la longueur (A) de l'adaptateur (30).

6. Frein hydraulique sur jante selon l'une des revendications précédentes, **caractérisé en ce que**
par rapport à la direction longitudinale (L) de la partie de cadre (60), le trajet de réglage possible (V) est supérieur à 1 mm, de préférence supérieur à 2 mm, de préférence encore supérieur à 4 mm, de préférence encore supérieur à 4 mm, et préférentiellement d'environ 5 mm.

7. Frein hydraulique sur jante selon l'une des revendications précédentes, **caractérisé en ce que**
par rapport à la direction longitudinale (L) de la partie de cadre (60), le trajet de réglage possible (V) est inférieur à 11 mm, de préférence inférieur à 9 mm, de préférence encore inférieur à 8 mm, de préférence encore inférieur à 7 mm, et préférentiellement inférieur à 6 mm.

8. Frein hydraulique sur jante selon l'une des revendications précédentes, **caractérisé en ce que**
l'adaptateur (30) comporte un dispositif de fixation (36) permettant de fixer l'adaptateur (30) dans une position déterminée par rapport au dispositif de fixation (70).

9. Frein hydraulique sur jante selon l'une des revendications précédentes, **caractérisé en ce que**
le dispositif de réception (70) présente à chacune de ses extrémités (70a, 70b), opposées par rapport à la direction longitudinale (L) de la partie de cadre (60), une portion de dispositif de translation (75, 76).

10. Frein hydraulique sur jante selon l'une des revendications précédentes, **caractérisé en ce que**
l'adaptateur (30) et le dispositif de réception (70) sont disposés et réalisés de telle sorte que la force agissant dans la direction longitudinale (K) du cylindre de frein (10) lors du freinage est transmise de l'adaptateur (30) au dispositif de réception (71) à une distance (C) de la partie de cadre qui correspond sensiblement à la distance entre le cylindre de frein (D) et la partie de cadre.

11. Frein hydraulique sur jante selon l'une des revendications précédentes, **caractérisé en ce que**
le cylindre de frein (10) peut être fixé à l'adaptateur (30) par une pièce de coincement (40).

12. Frein hydraulique sur jante selon l'une des revendications précédentes, **caractérisé en ce que**
le cylindre de frein (10) peut être fixé à l'adaptateur (30) par un dispositif de serrage (50 ; 90).

13. Frein hydraulique sur jante selon l'une des revendications précédentes, comprenant deux dispositifs de réception (70) destinés à recevoir chacun un adaptateur (30), les dispositifs de réception étant disposés sur des parties de cadre (60) opposées et étant reliés l'un à l'autre par un pont de renforcement (80), le pont de renforcement (80) présentant une échancrure (81) destinée à recevoir le conduit de frein (14).

14. Frein hydraulique sur jante selon la revendication 13, **caractérisé en ce que**
au moins sur son côté (81b) détourné de la garniture réceptrice (1), la largeur de l'échancrure (81) destinée à recevoir le conduit de frein est supérieure à 1,5 fois, de préférence supérieure à 1,6 fois, de préférence encore supérieure à 1,7 fois, de préférence encore supérieure à 1,8 fois, de préférence encore supérieure à 1,9 fois, et préférentiellement environ le double du diamètre extérieur du conduit de frein (14).
